**Europäisches Patentamt**

**European Patent Office**

**Office européen des brevets**

(19)

(11) Numéro de publication: **0 009 067**
**B1**

(12) **FASCICULE DE BREVET EUROPEEN**

(45) Date de publication du fascicule du brevet: **21.04.82**

(51) Int. Cl.³: **B 60 C 3/00,** B 29 H 17/02, B 60 C 9/18

(21) Numéro de dépôt: **78400117.4**

(22) Date de dépôt: **27.09.78**

(54) **Pneumatique tubulaire isostable.**

(43) Date de publication de la demande:
**02.04.80 Bulletin 80/7**

(45) Mention de la délivrance du brevet:
**21.04.82 Bulletin 82/16**

(84) Etats contractants désignés:
**BE CH DE GB LU NL SE**

(56) Documents cités:
**FR - A - 671 324**
**FR - A - 1 174 970**
**FR - A - 1 391 143**
**FR - A - 2 317 111**
**LU - A - 68 167**

**RUBBER CHEMISTRY TECHNOLOGY AKRON,**
**1963 R. B. DAY and S. D. GEHMAN: "Theory for**
**the meridian section of inflated cord tires",**
**pages 11—27.**

(73) Titulaire: **THE GOODYEAR TIRE & RUBBER COMPANY**
**1144 East Market Street**
**Akron, Ohio 44316 (US)**

(72) Inventeur: **Gazuit, Georges**
**10, rue de la Gaîté**
**F-03100 Montlucon (FR)**

(74) Mandataire: **Weyland, Joseph Jean Pierre**
**Goodyear International Tire Technical Center**
**Patent Department Avenue Gordon Smith**
**L-7750 Colmar-Berg (LU)**

Courier Press, Leamington Spa, England.

Pneumatique tubulaire isostable

La présente invention concerne un pneumatique tubulaire pour véhicules automobiles, du type comportant une chambre à air tubulaire gonflable, une ceinture, une armature du type radial, une bandede jante, des gommes de flancs, une bande de roulement et deux tringles circulaires semi-rigides disposées au niveau de la ceinture aux bords de celle-ci.

Théoriquement, pour les formes les plus courantes de pneumatiques, l'utilisation la plus rationnelle des caractéristiques à la traction des câbles composant la carcasse du pneumatique nécessite que les fils de la carcasse soient positionnés dans des plans radiaux de pneumatique. Toutefois, si un tel pneumatique est soumis à un effort transversal (moment de roulis), il se produit une déformation des fils radiaux dans la partie du pneu qui est en contact avec le sol. Ce moment de roulis s'accompagne d'un effet secondaire de moment de lacet sur les fils en contact avec le sol, et l'angle de distorsion qui en résulte provoque une perte de stabilité latérale dans les conditions normales de roulage.

Afin de remédier à ce grave défaut, les fabricants de pneumatiques ont été amenés à incliner les fils radiaux d'un certain angle de part et d'autre de la direction circonférentielle du pneu, de façon à établir un champ de force géodésique (pneumatiques à plis en biais appelés couramment pneumatiques conventionnels). Lorsqu'un pneumatique conventionnel est soumis à un moment de roulis sous un effort transversal, le moment de lacet induit du moment de roulis est amorti par le moment des forces créées par l'effort oblique dans les plis en biais (composante horizontale). Le système géodésique de construction a donc un effet d'auto-stabilité sur un effet de roulis du pneumatique provoqué par un effort transversal. Cependant, une telle construction géodésique présente elle aussi un inconvénient. En effet, la distorsion du losange formé par les plis en biais dans la zone d'empreinte au sol crée des glissements entre les plis, d'où il en résulte un échauffement et un glissement du pneumatique sur la route, qui augmente substantiellement l'usure du pneumatique.

Ces inconvénients sont en partie supprimés avec l'apparition du pneumatique à ceinture, couramment appelé "pneumatique à carcasse radiale" ou, en abrégé, "pnematique radial". Ce pneumatique radial reprend l'utilisation rationnelle des fils radiaux pour la carcasse, et la déformation des fils radiaux dans la zone d'empreinte au sol sous l'effet d'un effort transversal est empêchée par une ceinture indéformable. Sous l'effet d'un mouvement de roulis, seuls les flancs du pneumatique subissent un moment de lacet. Théoriquement, la ceinture indéformable incorporée à la bande de roulement ne subit aucune déformation angulaire. La tenue du pneumatique, en stabilité transversale, dépend donc uniquement de la précision du développement sur la route de la ceinture indéformable incorporée à la bande de roulement, et ce jusqu'à une valeur limite du moment de lacet sur les flancs, qui est fonction de l'adhérence de la bande de roulement sur la route. Au-delà de cette valeur limite, la bande de roulement perd brutalement son adhérence. Ceci explique la mauvaise stabilité transversale bien connue des pneumatiques radiaux.

En outre, les pneumatiques radiaux ont un autre inconvénient bien connu, qui est l'échauffement de leurs flancs. En effet, sous un effort vertical (effet d'écrasement du pneumatique), chaque flanc est soumis à une action de flambage se caractérisant par une variation brutale du rayon de courbure du flanc principalement dans deux zones critiques situées respectivement au voisinage de la zone de raccordement entre le flanc et la bande de roulement. Ces variations brutales de rayon de courbure se traduisent, par suite d'une action de pliage répétée, par un échauffement important de ces deux zones critiques. Sous un effort transversal, un échauffement analogue se produit dans la zone critique de raccordement entre chaque flanc et la bande de roulement. Ces échauffements peuvent provoquer un décollement du talon dans la zone critique du talon et une décollement de la bande de roulement dans la zone critique de raccordement entre les flancs et la bande de roulement. L'effet d'amortissement d'un pneumatique radial provoque donc systématiquement des échauffements, en particulier dans les deux zones critiques de chaque flanc indiquées ci-dessus, dont l'une peut avoir des conséquences graves sur la résistance du pneumatique.

Malgré les défauts rappelés ci-dessus (défaut de stabilité transversale et échauffement dans les deux zones critiques) et malgré une difficulté de construction supérieure à celle d'un pneumatique conventionnel, les pneumatiques radiaux se sont imposés sur le marché depuis quelques années.

En dehors des pneumatiques classiques rappelés ci-dessus (pneumatiques conventionnels et pneumatiques radiaux), il existe également des pneumatiques dits "tubulaires" ou "sans chambre". Ces pneumatiques tubulaires sont issus des premiers pneumatiques inventés au début du siècle. La ou les chambres à air, à section ronde ou ovale, est ou sont armées de fils en biais ou radiaux, soit par enroulement unifilaire, soit par enveloppe d'un tissu cousu. Ces pneumatiques tubulaires présentent un certain nombre d'advantages:

1) Chambre à air incorporée, donc système dit "tubeless".

2) Dans certains pneumatiques tubulaires, suppression des tringles en tant qu'éléments de résistance du pneumatique.

3) Champs de forces équilibrés dans le carcasse du pneumatique.

Des pneumatiques tubulaires de ce genre sont par exemple décrits dans le brevet français n° 2 052 885 et dans la demande de brevet en France n° 2 348 066, déposée le 14 avril 1976 au nom de Georges GAZUIT ét intitulée "Pneumatique tubulaire isostable et son procédé de fabrication". Les pneumatiques décrits dans ces deux documents présentent les mêmes défauts que les pneumatiques radiaux en ce qui concerne l'échauffement de leurs flancs (chaque flanc a aussi deux zones critiques). Dans le cas du pneumatique tubulaire à carcasse radiale décrit dans le brevet français n° 2 052 885, il se produit même une aggravation du défaut de stabilité transversale par rapport au pneumatique radial classique. En effet, ce défaut accentué de stabilité transversale résulte du fait que, vue en coupe radiale, la section due pneumatique peut rouler sur elle-même sous l'action d'un effort transversal. Par contre, le pneumatique décrit dans la demande de brevet en France susindiquée n° 2 348 066 présente une stabilité transversale améliorée par rapport au pneumatique tubulaire du brevet français n° 2 052 885 et au pneumatique radial classique, mais cette amélioration de la stabilité transversale est obtenue au détriment de l'amortissement et au prix d'un échauffement important de la matière élastique de liaison entre les chambres à air.

En fait, le pneumatique idéal doit donc avoir les caractéristiques suivantes:

1°) Une grande flexibilité dans le sens vertical (amortissement des efforts verticaux auxquels le pneumatique est soumis).

2°) Une grande rigidité ou stabilité dans le sens transversal pour résister aux efforts transversaux.

3°) Une échauffement interne minimal (carcasse à fils de préférence radiaux; pas de zone critique d'échauffement des flancs).

4°) Un coût de fabrication minimal (industrialisation maximale par mécanisation, investissements minimaux, consommation minimale d'énergie pour la production du pneumatique).

La présente invention a donc essentiellement pour but de fournir un pneumatique tubulaire isostable du type indiqué plus haut, qui réponde aux quatre caractéristiques mentionnées ci-dessus.

A cet effet, le pneumatique tubulaire selon la présente invention est caractérisé en ce que la bande de jante a une largeur comprise entre 0,27 L et 0,35 L, où L représente la largeur totale de la bande de roulement, en ce que la section transversale du pneumatique a de façon connue un rapport H/L compris entre 0,5 et 0,6, où H représente la hauteur totale entre bande de jante et bande de roulement, et en ce que, vu en coupe transversale, chaque flanc du pneumatique a, dans la zone de l'armature ou de la gomme interne de flanc, un profil qui correspond à la partie supérieure de la courbe représentant le profil méridien d'un pneumatique radial classique et définie par l'équation d'équilibre

$$x = \int_{y}^{a} \frac{y^2 - b^2}{\sqrt{(a^2 - b^2)^2 - (y^2 - b^2)^2}} \cdot dy$$

dans laquelle $a$ est l'ordonnée du point couronne du profil méridien mesurée à partir de l'axe de rotation du pneumatique, et $b$ est l'ordonnée du point de largeur maximale dudit profil méridien, ladite partie supérieure étant sensiblement comprise entre les points de cette courbe où les tangentes sont respectivement verticale et horizontale, l'ensemble étant tel que le pneumatique, vu en coupe transversale, forme sensiblement un système triangulé isostable.

Grâce à une telle structure et grâce à une forme particulière des flancs du pneumatique, qui sera décrite plus loin, le pneumatique tubulaire selon la présente invention a une grande flexibilité ou souplesse dans le sens vertical et une grande rigidité dans le sens transversal, il n'a pas de zone critique d'échauffement et il peut être fabriqué de manière très économique.

On donnera maintenant une description de diverses formes d'exécution du pneumatique tubulaire selon la présente invention en faisant référence aux dessins annexés sur lesquels:

La figure 1 est une vue partielle, en coupe transversale, d'un pneumatique tubulaire conforme à une première forme d'exécution de la présente invention.

La figure 2 est un graphique montrant la courbe représentative de l'équation d'équilibre d'un pneumatique radial classique, et montrant plus particulièrement les portions de cette courbe qui sont prises pour déterminer respectivement la forme des flancs d'un pneumatique radial classique et la forme d'un pneumatique tubulaire selon la présente invention.

Les figures 3 et 4 sont des vues schématiques permettant d'illustrer les raisons pour lesquelles le pneumatique tubulaire selon l'invention a une bonne stabilité dans le sens transversal et une bonne souplesse dans le sens vertical, sans création de zone critique d'échauffement dans les flancs du pneumatique.

La figure 5 est une vue schématique en perspective illustrant une étape de la fabrication de la ceinture du pneumatique tubulaire selon l'invention.

La figure 6 illustre une étape ultérieure de la fabrication de la ceinture.

La figure 7 est une vue partielle de la ceinture terminée fabriquée comme illustré sur les figures 5 et 6.

La figure 8 est une vue partielle montrant une variante d'exécution de la ceinture représentée sur la figure 7.

La figure 9 est une vue partielle développée à plat de la ceinture, montrant la disposition des fils à l'intérieur de la ceinture après rabattement ou pliage des parties marginales autour des deux tringles.

La figure 10 est une vue schématique illustrant la fabrication de l'armature radiale et de la bande de jante.

Les figures 11, 12, 13 et 14 sont des vues schématiques illustrant la manière dont les éléments composant le pneumatique tubulaire selon l'invention sont assemblés.

La figure 15 est une vue partielle montrant la phase d'injection de la bande de roulement et de vulcanisation du pneumatique.

La figure 16 est une vue similaire à la figure 1, montrant un pneumatique tubulaire conforme à une seconde forme d'exécution de la présente invention.

La figure 17 est une vue partielle en perspective et en coupe, montrant un pneumatique tubulaire conforme à une troisième forme d'exécution de la présente invention.

La figure 18 est une vue partielle en coupe transversale d'un pneumatique tubulaire conforme à une quatrième forme d'exécution de la présente invention.

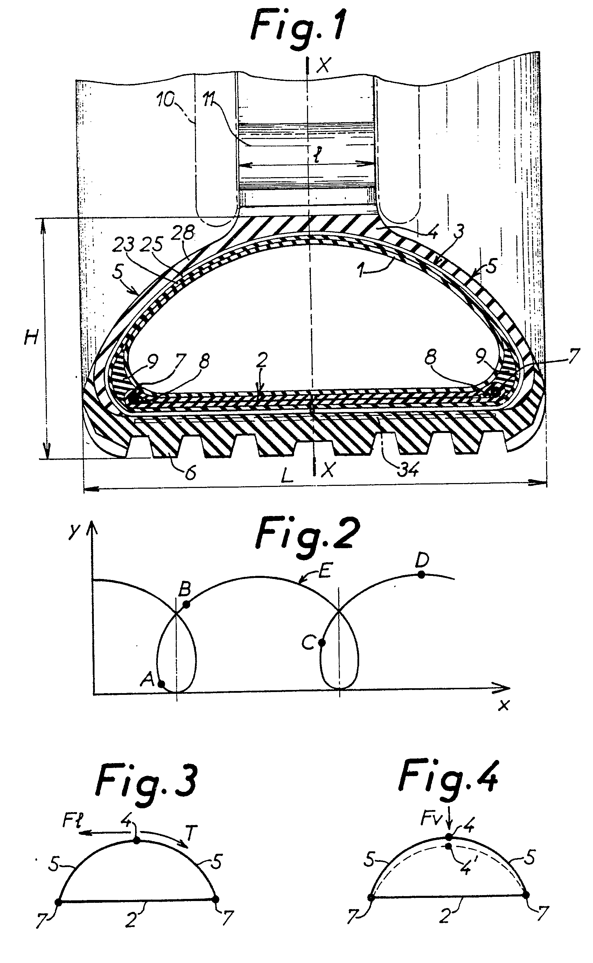

Le pneumatique tubulaire représenté sur la figure 1 comporte essentiellement une chambre à air tubulaire gonflable 1, une ceinture indéformable 2, une armature 3 du type radial, une bande de jante 4, des gommes de flancs 5, une bande de roulement 6 et deux tringles circulaires semi-rigides 7.

Selon la présente invention, les deux tringles 7 sont disposées au niveau de la ceinture 2 aux bords de celleci. La bande de jante 4 a une largeur *l* comprise entre 0,25 L et 0,35 L, où L représente la largeur totale de la bande de roulement 6. La section transversale du pneumatique a un rapport H/L compris entre 0,5 et 0.6 où H représente la hauteur totale entre la bande de jante 4 et la bande de roulement 6.

Les flancs 5 due pneumatique ont un profil correspondant à celui de la partie supérieure de la courbe définie par l'équation suivante:

$$x = \int_{y}^{a} \frac{y^2 - b^2}{\sqrt{(a^2 - b^2)^2 - (y^2 - b^2)^2}} \, . \, dy$$

Cette équation représente l'équation d'équilibre bien connue d'un pneumatique radial classique. La signification des différents paramètres de cette équation, qui a déjà été indiquée plus haut, et les calculs relatifs à cette équation sont donnés notamment dans la revue "Tyre Science and Technology TSTCA", vol. 1, n° 3 d'août 1973, pages 290 à 345. La courbe E représentative de cette équation est représentée sur la figure 2. Plus précisément, le flanc gauche 5 (vu dans la figure 1) a un profil correspondant au profil de l'arc CD de la courbe E de la figure 2. Le point C est un point voisin ou confondu avec la point de la courbe E où la tangente à cette courbe est sensiblement verticale. Le point D est un point voisin ou confondu avec le sommet de la courbe E, où la tangente à cette courbe est sensiblement horizontale. Bien entendu, le flanc droit 5 du pneumatique a un profil symétrique de celui du flanc gauche par rapport au plan médian transversal XX (figure 1) du pneumatique. A titre de comparaison, le flanc gauche d'un pneumatique radial classique a un profil correspondant à celui de l'arc AB de la courbe E de la figure 2.

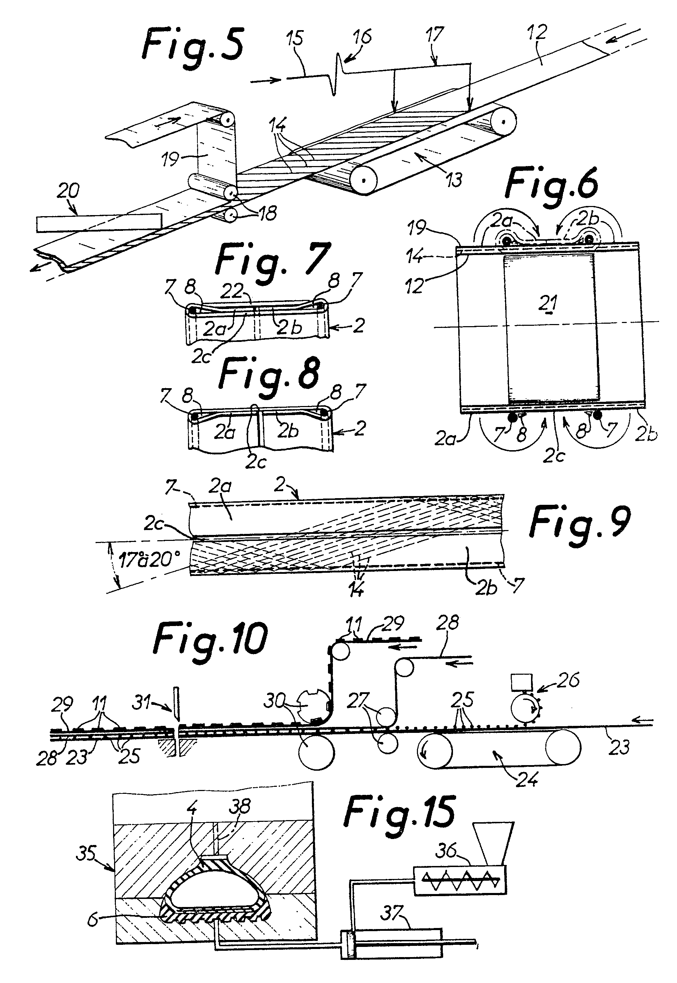

De préférence, comme montré sur la figure 1, les deux tringles 7 sont ancrées respectivement aux extrémités de la ceinture 2, de façon à donner à cette dernière une grande rigidité dans son plan (vu dans la figure 1) et de façon à définir deux points fixes. L'armature radiale 3 entoure complètement l'ensemble formé par la chambre à air 1 et par la ceinture 2 avec les tringles 7, des gommes d'apex 8 et 9 étant prévues de manière connue en soi pour combler les vides. Les gommes de flancs 5 sont accrochées d'une part axus extrémités de la ceinture 2 et d'autre part à la bande de jante 4. La bande de jante 4 peut être réalisée en un caoutchouc plus dur que les flancs 5, de façon à constituer un élément rigide accroché sur la jante 10 (montrée en trait mixte sur la figure 1) de la roue du véhicule automobile. La jante 10 peut être réalisée de manière connue en soi en deux parties détachables axialement et munies chacune d'un rebord, la bande de jante 4 étant pincée ou maintenue sans possibilité de mouvement axial entre les deux rebords de la jante 10. Bien que la surface périphérique interne de la bande de jante 4 pourrait être lisse, elle est de préférence pourvue, de manière connue en soi, de parties en saillie 11 espacées circonférentiellement et formant des cannelures permettant un accrochage positif du pneumatique sur la jante 10 qui, dans ce cas, est cannelée de manière correspondante. Au lieu d'avoir des cannelures, la surface périphérique interne de la bande de jante 4 pourrait être formée, de manière connue en soi, de deux surfaces tronconiques disposées de telle manière que le volume intérieur qu'elles délimitent présente la forme d'un diabolo, d'une manière analogue à celle représentée sur la figure 7 de la demande de brevet français susmentionnée n° 2 348 066.

Avec la structure du pneumatique tubulaire qui a été décrite ci-dessus, on obtient, vu en coupe transversale, un système triangulé isostable, dont les trois sommets sont formés par les trois points que constituent les deux tringles 7 et la bande de jante rigide 4. Grâce à une telle triangulation transversale, on obtient un pneumatique ayant une excellente souplesse dans le sens vertical et une très bonne stabilité dans le plan transversal, comme cela sera maintenant expliqué en faisant référence aux figures 3 et 4. On supposera que les deux points 7 sont fixed par rapport au sol et que le point 4 est mobile. Comme montré sur la figure 3, lorsque le pneumatique est soumis à un effort latéral $F_1$, la réaction T qui en résulte à l'intérieur du flanc 5 opposé au sens de l'effort $F_1$ s'oppose au déplacement latéral du point 4. Il en résulte un déplacement latéral de ce point 4 de très faible valeur comparée à la valeur du déplacement latéral qui se produirait avec un pneumatique radial classique. En outre, au cours de ce faible déplacement latéral, les flancs 5 travaillent, non pas au flambage comme dans un pneumatique radial classique, mais à la flexion avec pas ou peu de distorsion angulaire au niveau des points 7. Il n'en résulte donc aucun échauffement ou très peu d'échauffement au niveau des tringles 7 et, par conséquent, il n'y a pas de risque de décollement de la bande de roulement 6.

De même, lorsque le pneumatique est soumis à un effort vertical $F_v$ (écrasement) comme montré sur la figure 4, le point 4 s'enfonce en 4' par flexion des flancs 5, et non pas par flambage comme cela se produit dans un pneumatique radial classique. Les points 7 étant considérés comme fixes, il n'y a pas de distorsion angulaire des flancs 5 au niveau de ces deux points et, par conséquent, pas d'échauffement.

Une telle forme d'enceinte assure donc un bon amortissement dans le sens vertical et une bonne rigidité dans le sens transversal, et elle provoque nettement moins d'échauffement que dans le cas d'un pneumatique de forme classique en particulier dans les zones critiques de l'accrochage de la ceinture. En outre, du fait de la grande rigidité de la ceinture 2 due à la disposition particulière des tringles 7, le pneumatique selon la présente invention a une excellente stabilité au sol.

La ceinture 2 peut être réalisée de toute manière conventionnelle à partir d'un tissu, textile ou métallique, gommé et tissé croisé obliquement.

Toutefoils, on décrira maintenant une forme d'exécution préférée de la ceinture 2 en faisant référence aux figures 5 à 9. Comme montré sur la figure 5, une première nappe de gomme 12, produite par une boudineuse conventionnelle non montrée, est amenée sur le brin supérieur d'un tapis roulant 13 pour y recevoir des segments de fils 14. Les segments de fils 14 sont formés à partir d'un fil continu 15, en acier ou en fibre de verre, déroulé à partir d'une bobine non montrée et gommé à l'aide d'une extrudeuse de gomme conventionnelle. Le fil 15 convenablement gommé est emmagasiné provisiorement dans un feston 16, à partir duquel il est acheminé à un dispositif d'alimentation 17, par exemple du type à barillet, dans lequel le fil 15 est coupé en segments 14 de longueur appropriée, qui sont pincés à un angle prédéterminé par rapport à l'axe longitudinal de la nappe de gomme 12. De préférence, cet angle est compris entre 17 degrés et 20 degrés. Les segments 14 ainsi coupés et pincés sont distribués avec ce même angle et avec un pas d'espacement prédéterminé par le dispositif d'alimentation 17 sur la nappe de gomme 12. La nappe de gomme 12 ainsi recouverte par les segments de fil 14 est ensuite acheminée entre des rouleaux presseurs 18, entre lesquels on fait aussi passer une deuxième nappe de gomme 19, de telle façon que les segments de fils 14 soit pris en sandwich entre les deux nappes 12 et 19. La nappe 19 a la même largeur que la nappe 12 et est aussi fabriquée au moyen d'une boudineuse conventionnelle. L'ensemble ainsi obtenu à la sortie des deux rouleaux presseurs 18 est ensuite coupé à une longeuer prédéterminée, correspondant à la longueur de la circonférence du pneumatique devant être réalisé, par un dispositif de couple 20. Jusqu'à ce stade de la fabrication de la ceinture, les opérations décrites ci-dessus sont bien connues. On notera toutefois que pour la réalisation de la ceinture selon la présente invention, les deux nappes de gomme 12 et 19 doivent avoir une largeur supérieure à la distance entre les deux tringles 7, cette distance étant de préférence environ égale à 0,85 fois la largeur L de la bande de roulement. Comme on va le voir, la nouveauté du procédé de fabrication de la ceinture du pneumatique selon l'invention réside en ce que les parties marginales de l'ensemble formé par les deux nappes 12 et 19 et par les fils 14 sont repliées autour des deux tringles 7.

Après avoid été coupé à la longueur appropriée par le dispositif de couple 20, l'ensemble formé par les deux nappes 12 et 19 et par les fils 14 est enroulé sur un tambour 21 comme montré sur la figure 6. Les gommes d'apex 8 et les tringles 7 sont ensuite placées sur le tambour 21, comme montré sur la figure 6, avec un écartement prédéterminé entre elles, par exemple à la distance 0,85 L l'une de l'autre, puis les parties marginales 2a et 2b de l'ensemble 12, 14, 19 sont rabattues à 180 degrés autour des tringles 7 vers le plan médian transversal du tambour 21, qui est aussi le plan médian transversal XX du pneumatique. Comme montré sur la figure 7, une nappe de gomme de liaison 22 peut être placée, si on le désire, autour de la ceinture 2 ainsi obtenue, afin de lier fermement entre elles les parties marginales rabattues 2a et 2b et afin d'empêcher qu'elles ne puissent s'écarter l'une de l'autre lorsque, en service, elles sont soumises à une traction dans le sens latéral. Dans la forme d'exécution qui a été décrite ci-dessus, les parties marginales rabattues 2a et 2b se trouvent radialement à l'extérieur par rapport à la partie centrale 2c de l'ensemble formé par les deux nappes 12 et 19 et par les fils 14. Selon une variante d'exécution, les parties marginales 2a et 2b peuvent être repliées autour des tringles 7 de telle façon que, après pliage, elles se trouvent radialement à l'intérieur par rapporte à la partie centrale 2c, comme montré sur la figure 8. Dans ces conditions, il est possible de se passer de la bande de liaison 22 de la figure 7 car, dans ce cas, en service, ce ne sont pas les parties marginales 2a et 2b qui sont soumises à un effort de traction, mais la partie centrale 2c, et il n'y a donc pas de risque que les parties marginales 2a et 2b s'écartent l'une de l'autre.

La figure 9 montre la configuration prise par les segments defil 14 après pliage des parties marginales 2a et 2b a tour des deux tringles 7, la ceinture 2 étant supposée développée à plat.

On décrira maintenant comment peut être réalisée l'armature radiale 3 du pneumatique représenté sur la figure 1. Comme montré sur la figure 10, une nappe de gomme 23 (voir aussi la figure 1), produite par une boudineuse conventionnelle, est amenée sur le brin supérieur d'un convoyeur 24 pour y recevoir des segments def il gommé 25, métallique ou en fibres de verre. Les segments de fil 25 peuvent être obtenus de la même manière que les segments de fil 14 de la ceinture 2, et ils peuvent être distribués avec un pas d'espacement prédéterminé sur la nappe de gomme 23 à l.aide d'un dispositif d'alimentation 26, par exemple un dispositif d'alimentation du type à barillet analogue au dispositif d'alimentation 17 de la figure 5. Toutefois, dans ce cas, les segments de fil 25 sont placés par le dispositif d'alimentation 26 transversalement par rapport à l'axe longitudinal de la nappe 23, c'est-à-dire avec un angle de 90 degrés par rapport audit axe. La nappe 23 revêtue des segments de fil 25 est ensuite acheminée entre deux rouleaux presseurs 27, entre lesquels on fait également passer une autre nappe de gomme 28, de telle façon que les segments de fil 25 soient pris en sandwich entre les deux nappes 23 et 28. La nappe 28 peut être aussi produite au moyen d'une boudineuse conventionnelle.

Si on le désire, la bande de jante 4 peut aussi être formée à ce stade de la fabrication. Dans ce but, un ruban de gomme 29, ayant une largeur correspondant à celle de la bande de jante 4, est extrudé au moyen d'une boudineuse conventionnelle (non montrée) et est passé entre deux cylindres presseurs (non montrés), dont l'un est cannelé de manière à former sur ce ruban 29 des saillies correspondant aux cannelures 11 de la bande de jante 4. Le ruban 29 est réalisé à partir d'une gomme renfermant un pourcentage de soufre plus grand que celui des nappes 23 et 28, de façon à avoir, après vulcanisation, une dureté plus grande que celle desdites nappes 23 et 28. Comme montré sur la figure 10, on fait ensuite passer le ruban 29 en même temps que l'ensemble formé par les deux nappes 23 et 28 et par les fils 25 entre deux rouleaux presseurs 30, dont l'un est cannelé, afin de fixer ce ruban 29 sur la nappe 28 suivant l'axe médian longitudinal de cette nappe. L'ensemble obtenu à la sortie des deux rouleaux presseurs 30 est ensuite acheminé à un dispositif de coupe 31 propre à couper cet ensemble en tronçons ayant une longueur appropriée dépendant des dimensions du pneumatique devant être réalisé.

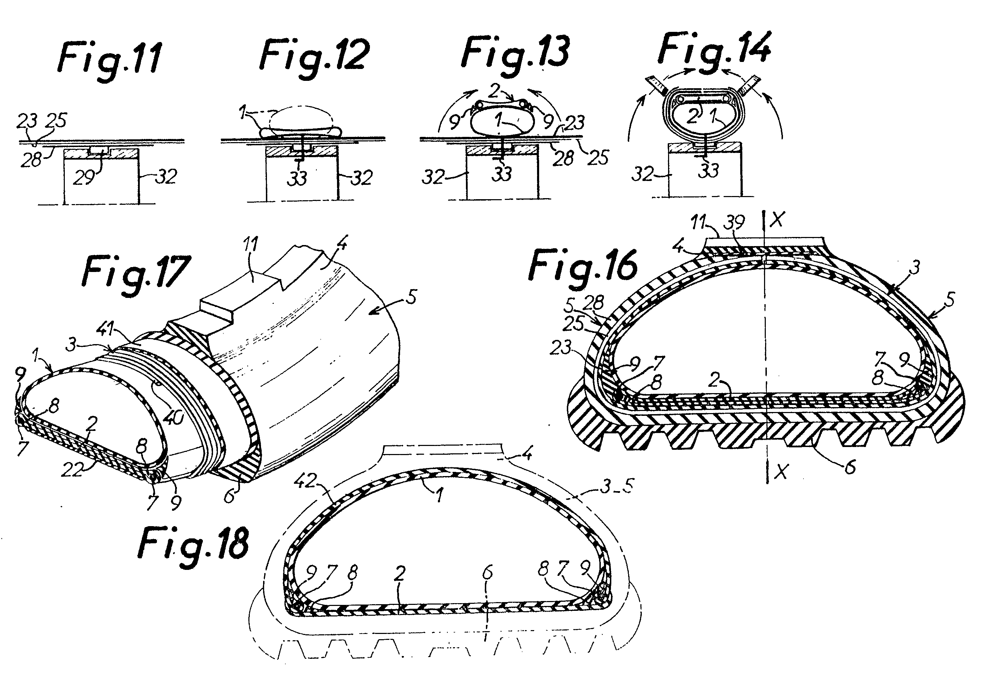

On décrira maintenant comment les éléments du pneumatique qui ont été décrits ci-dessus peuvent être assemblés en faisant référence aux figures 11 à 14. Chaque ensemble 23, 25, 28, 29, coupé à la longueur voulue par le dispositif de coupe 31 de la figure 10, est enroulé sur la périphérie d'un tambour 32 de diamètre approprié comme montré sur la figure 11, et les extrémités dudit ensemble sont reliées entre elles de manière conventionnelle. La chambre à air 1 avec sa valve de gonflage 33 est ensuite posée comme montré sur la figure 12, et gonflée à basse pression. La ceinture 2 et les gommes d'apex 9 sont ensuite posées sur la périphérie de la chambre à air 1 comme montré sur la figure 13. Enfin, les parties marginales de l'ensemble formé par les deux nappes 23 et 28 et par les fils 25 sont rabattues autour de l'ensemble formé par la chambre à air 1, les gommes d'apex 9 et la ceinture 2, par une opération de roulage conventionnelle comme montré sur la figure 14. La largeur de la nappe 23 et la longueur des segments de fil 25, qui est sensiblement égale à la largeur de la nappe 23, sont choisies de telle façon que, après l'opération de roulage montrée sur la figure 4, les parties marginales de la nappe 23 et les extrémités des fils 25 formant l'armature 3 se rejoignent dans le plan médian transversal du pneumatique à l'extérieur de la ceinture 2, de façon à envelopper complètement l'ensemble formé par la chambre à air 1, la ceinture 2 et les deux tringles 7. Par contre, comme cela est notamment visible sur la figure 11, la nappe 28 peut avoir une largeur inférieure à celle de la nappe 23. Toutefois, la nappe 28 doit avoir une largeur suffisante pour que ses parties marginales, qui sont situées de part et d'autre du ruban 29 formant la bande de jante 4 et qui sont respectivement destinées à former les gommes de flanc 5 du pneumatique, viennent s'accrocher au niveau des extrémités de la ceinture 2 après l'opération de roulage montrée sur la figure 14. Bien entendu, la nappe 28 pourrait avoir la même largeur que la nappe 23. La largeur de la nappe 23 et la longueur des fils 25 peuvent être par exemple choisies de telle façon que les parties marginales de la nappe 23 et les extrémités des fils 25 se rejoignent respectivement bord à bord et bout à bout dans le plan médian transversal du pneumatique. Dans ce cas, les parties marginales de la nappe 23 et les extrémités des segments de fils 25 peuvent être liées entre elles directement par la bande de roulement 6 comme montré sur la figure 1. Toutefois, afin de renforcer la liaison entre les parties marginales de la nappe 23 et entre les extrémités des fils 25 (et éventuellement les parties marginales de la nappe 28) et afin de mieux résister aux efforts de traction latéraux en service, on peut avantageusement prévoir une nappe de gomme de liaison ou mieux une deuxième ceinture 34, comme cela est montré en trait mixte sur la figure 1. Dans le cas où une gomme de liaison ou une centure 34 est prévue, celle-ci peut être mise en place sur l'ensemble obtenu après l'opération de roulage montrée sur la figure 14, de telle façon que les parties marginales de la nappe 23, les extrémités des segments de fils 25 et éventuellement les parties marginales de la nappe 28 soient prises en sandwich entre la ceinture 2 et la bande de liaison ou la ceinture 34. La ceinture 34 peut être une ceinture conventionnelle en tissu gommé, textile ou métallique, tissu avec des fils croisés obliquement suivant un angle different des fils 14 de la ceinture 2.

A titre de variante, la largeur de la nappe 23, la longueur des segments de fil 25 et éventuellement la largeur de la nappe 28 peuvent être choisies de telle façon que, après les opérations de roulage montrées sur la figure 14, lesdites parties marginales de la nappe 23 (et éventuellement de la nappe 28) et les extrémités des segments de fil 25 se chevauchent sur toute ou partie de la largeur de la ceinture 2.

L'ensemble obtenu après les opérations de roulage montrées sur la figure 14, éventuellement muni d'une bande de liaison ou d'une ceinture 34, est ensuite placé dans un moule chauffant 35 (figure 15), auquel est associé un dispositif d'extrusion de gomme 36 et un dispositif de transfert 37 pour l'injection de la bande de roulement 6. Le moule 35 sert également à la vulcanisation du pneumatique. Les parties de la paroi de la cavité interne du moule qui correspondent aux flancs 5 du pneumatique sont conformées de façon à donner aux flancs 5 un profil correspondant à celui de l'arc CD de la courbe E représentée sur la figure 2.

Dans ce qui précède, on a supposé que la bande de jante 4 du pneumatique était formée en même temps que l'armature radiale 3, comme cela a été expliqué plus haut à propos de la figure 10. Toutefois, la bande de jante 4 peut être aussi formée par injection en même temps que la bande de roulement 6 dans le moule 35. Dans ce cas, le moule 35 comportera au moins un autre orifice d'injection 38 (montré en trait mixte sur la figure 15) pour l'injection de la gomme destinée à former la bande de jante 4.

Par ailleurs, dans ce qui précède, on a supposé que l'ensemble formé par la chambre à air 1, par les gommes d'apex 9 et par la ceinture 2 avec les tringles 7 était enveloppé par les nappes de gomme 23 et 28 et par les segments de fils radiaux 25 de telle sorte que les parties marginales de ces deux nappes 23 et 28 et les extrémités des fils 25 se rejoignent dans le plan médian transversal de symétrie XX du pneumatique à l'extérieur de la ceinture 2. Toutefois, les deux nappes 23 et 28, sans le ruban 29 formant la bande de jante, et les segments de fil 25 peuvent aussi envelopper l'ensemble formé par la chambre à air 1, par les gommes d'apex 9 et par la ceinture 2 avec les tringles 7, de telle façon que les parties marginales des nappes 23 et 28 et les extrémités des segments de fil 25 se rejoignent dans le plan médian transversal de symétrie du pneumatique au niveau de la bande de jante 4, comme cela est montré sur la figure 16. Comme précédemment, les parties marginales des nappes 23 et 28 et les extrémités des fils 25 peuvent se rejoindre respectivement bord à bord et bout à bout et être reliées entre elles soit directement, par la bande de jante 4 appliquée ou injectée en place, soit au moyen d'une gomme de liaison ou d'une autre ceinture 39 comme cela est montré sur la figure 16, la bande de jante 4 étant appliquée ou injectée en place après la pose de la bande de liaison ou de la ceinture 39. Dans le cas où on utilise une ceinture 39, celli-ci peut être constituée de maînière conventionnelle par un tissu gommé, textile ou métallique, dont les fils sont tissés croisés obliquement.

La figure 17 montre une autre forme d'exécution du pneumatique selon la présente invention, et plus particulièrement, une autre façon possible de réaliser l'armature radiale 3. Dans la figure 17, l'armature radiale 3 est réalisée par bobinage d'un unique fil gommé 40, métallique ou en fibre de verre, de telle façon que les spires formées par le bobinage se trouvent sensiblement dans des plans radiaux du pneumatique. Il est déjà connu, dans les pneumatiques tubulaires, d'armer une chambre à air par bobinage d'un fil gommé. Toutefois, dans le cas présent, la particularité du bobinage réside en ce que les spires radiales formées par le fil 40 entourent non seulement la chambre à air 1 mais également la ceinture 2 avec les tringles 7 et les gommes d'apex 9. Comme le montre la figure 17, une gomme de liaison 41 est également placée autour des spires de fil 40. La pose des gommes de flanc 5 peut être effectuée par des opérations de roulage, d'une manière analogue à celle représentée sur la figure 14.

La figure 18 montre, en partie, une autre forme d'exécution du pneumatique tubulaire selon la présente invention. Dans la forme d'exécution représentée sur la figure 18, la ceinture 2 n'est pas repliée autour des tringles 7, mais les tringles 7 sont ancrées dans les bords repliés vers l'intérieur, d'une nappe de gomme 42 entourant partiellement la chambre à air 1 à l'exception de sa partie adjacente à la bande de roulement 6. La ceinture 2, qui peut être par exemple constituée par un tissu gommé, textile ou métallique, tissé croisé obliquement avec un angle d'environ 17 à 20 degrés, est appliquée contre la partie de la chambre à air 1 adjacente à la bande de roulement 6, et les bords de la ceinture 2 chevauchent extérieurement les bords repliés de la nappe 42. L'armature radiale 3, les gommes de flanc 5 et la bande de jante 4 peuvent être réalisées par exemple comme décrit à propos de la figure 10, et elles peuvent être placées autour de l'ensemble formé par la chambre à air 1, par la ceinture 2 et par la nappe de gomme 42 avec les tringles 7, par des opérations de roulage analogues à celles montrées sur la figure 14. De même, l'injection de la bande de roulement 6 et la vulcanisation du pneumatique peuvent être effectuées d'une manière analogue à celle montrée sur la figure 15.

Avant de décrire le processus général de fabrication du pneumatique tubulaire selon la présente invention, on rappellera brièvement que la fabrication d'un pneumatique radial classique ne suit pas un processus continu, mais passe par une succession d'opérations de transformation: mélange des gommes; préparation des tissus et calandrage; extrudage des plis de gomme; coupe; préparation des tringles; confection du pneumatique; vulcanisation. Toutes ces opérations se font généralement dans des ateliers indépendants, d'où il en résulte des opérations de manutention au moins aussi nombreuses que les opérations de transformation, et un problème de stockage des éléments entre les différentes phases de fabrication, stockage qui nécessite plus de place que les opérations de transformation elles-mêmes. En outre, dans la mesure où on chauffe et on refroidit plusieurs fois les mêmes éléments tout au long des opérations d'élaboration d'un pneumatique, il y a un gaspillage d'énergie très important. Enfin bien que les opérations susindiquées soient grandement mécanisées, la fabrication des pneumatiques radiaux classiques nécessite quand même une main d'oeuvre relativement importante. Pour toutes ces raisons, on comprendra aisément que le processus de fabrication d'un pneumatique radial classique est coûteux.

Au contraire, la fabrication du pneumatique tubulaire selon la présente invention peut être concentrée dans un seul atelier et réalisée suivant un processus continu en trois phases, une première phase d'élaboration des éléments de la structure de pneumatique, une deuxième phase d'assemblage des éléments de la structure et une troisième phase de vulcanisation de la structure. La première phase comprend trois parties qui peuvent se dérouler simultanément:

a) élaboration des carcasses, par exemple suivant la ligne de fabrication représentée sur la figure 10.

b) élaboration des chambres à air en caoutchouc butyle, au moyen d'une ligne de fabrication de chambre à air tout à fait classique, qui peut être éventuellement indépendante de la ligne de fabrication générale.

c) élaboration des ceintures avec pose des tringles, par exemple suivant la ligne représentée sur les figures 5 et 6. Les tringles, soit en fibre de verre, soit en câbles métalliques, peuvent être réalisées suivant le processus classique.

La deuxième phase (assemblage de la structure) peut se faire très simplement au moyen d'une ligne d'assemblage du type tourniquet comportant quatre postes:

a) un premier poste auquel aboutissent la ligne de fabrication des carcasses (figure 10) et la ligne de fabrication des chambres à air, et auquel sont effectuées les opérations illustrées sur les figures 11 et 12.

b) un deuxième poste qui est relié par un dispositif de transfert à la ligne de fabrication des ceintures (figures 5 et 6) et auquel est effectuée l'opération de pose de la ceinture illustrée sur la figure 13.

c) un troisième poste auquel sont effectuées les opérations de roulage illustrées sur la figure 14.

d) un quatrième poste ou poste d'évacuation, à partir duquel la structure ainsi assemblée est transférée à une ligne d'injection et de vulcanisation, dans laquelle s'effectue la troisième phase susindiquée (figure 15).

La ligne d'injection et de vulcanisation peut être aussi du type à tourniquet avec plusieurs cavités de moulage.

Un tel processus de fabrication permet de nombreuses économies par rapport au processus de fabrication d'un pneumatique radial classique. Notamment, il permet:

a) Une économie de main d'oeuvre.

b) Une économie de place, dans la mesure où il élimine 100% du stockage interphase du processus de fabrication d'un pneumatique radial classique.

c) Une économie de manutention dans la mesure où il élimine environ 90% des opérations de manutention interphase du processus de fabrication d'un pneumatique radial classique.

d) Une économie substantielle d'énergie de chauffage, étant donné que les éléments de la structure ne sont chauffés qu'une seule fois au départ et arrivent dans la cavité de moulage pour l'injection et la vulcanisation, à une température qui est encore de l'ordre de 50 à 60 degrés. Etant donné qui l'injection de la gomme dans le moule pour la formation de la bande de roulement peut se faire à une température d'environ 120 degrés ou plus, la température moyenne du pneumatique dans le moule, avant la vulcanisation, est donc de l'ordre de 90 degrés (dans le processus de fabrication d'un pneumatique radial classique, le carcasse introduite dans le moule de vulcanisation est froide). Il en résulte donc un gain d'énergie et un gain de temps de vulcanisation.

Le pneumatique tubulaire selon la présente invention peut être réalisé dans toutes les dimensions classiques de pneus pour véhicules de tourisme et pour véhicules poids lourds. Il est même possible de réaliser des pneumatiques duplex pour véhicule poids lourds, c'est-à-dire des pneumatiques jumelés. Dans ce dernier cas, les deux pneumatiques jumelés peuvent avoir une armature radiale commune et leurs bandes de roulement peuvent être injectées d'une seule pièce.

Il est bien entendu que les formes d'exécution du pneumatique tubulaire selon la présente invention qui ont été décrites ci-dessus, ont été données à titre d'exemples purement indicatifs et nullement limitatifs, et que de nombreuses modifications peuvent être apportées sans pour autant sortir du cadre de la présente invention.

## Revendications

1. Pneumatique tubulaire pour véhicules automobiles, du type comportant une chambre à air tubulaire gonflable (1), une ceinture (2), une armature (3) du type radial, une bande de jante (4), des gommes de flanc (23, 28), une bande de roulement (6) et deux tringles circulaires semi-rigides (7) disposées au niveau de la ceinture (2) aux bords de celle-ci, caractérisé en ce que la bande de jante (4) a une largeur *l* comprise entre 0,25 L et 0,35 L, où L représente la largeur totale de la bande de roulement (6), en ce que la section transversale du pneumatique a de façon connue un rapport H/L compris entre 0,5 et 0,6, où H représente la hauteur totale entre bande de jante (4) et bande de roulement (6), et en ce que, vu en coupe transversale, chaque flanc (5) du pneumatique a, dans la zone de l'armature (3) ou de la gomme interne de flanc (23), un profil qui correspond à la partie supérieure de la courbe (E) représentant le profil méridien d'un pneumatique radial classique et définie par l'équation d'équilibre:

$$x = \int_{y}^{a} \frac{y^2 - b^2}{\sqrt{(a^2-b^2)^2 - (y^2-b^2)^2}} \cdot dy$$

dans laquelle *a* est l'ordonnée du point couronne du profil méridien, mesurée à partir de l'axe de rotation du pneumatique, et *b* est l'ordonnée du point de largeur maximale dudit profil méridien, ladite partie supérieure étant sensiblement comprise entre les points (C) et (D) de cette courbe (E) où les tangentes sont respectivement verticale et horizontale, l'ensemble étant tel que le pneumatique, vu en coupe transversale, forme sensiblement un système triangulé isostable.

2. Pneumatique selon la revendication 1, caractérisé en ce que la surface périphérique interne de la bande de jante (4) est pourvue, de manière connue en soi, de parties (11) en saillie, espacées circonférentiellement et formant des cannelures permettant l'accrochage du pneumatique sur une jante (10), cannelée de manière correspondante, d'une roue.

3. Pneumatique selon la revendication 1, caractérisé en ce que la surface périphérique interne de la bande de jante (4) se compose, de manière connue en soi, de deux surfaces tronconiques disposées de telle manière que le volume intérieur qu'elles délimitent présente la forme d'un diabolo.

4. Pneumatique selon la revendication 1, caractérisé en ce que les tringles (7) sont ancrées dans les bords de la ceinture (2).

5. Pneumatique selon la revendication 4, caractérisé en ce que la ceinture (2) est formée, de manière connue en soi, par un ensemble de deux nappes de gomme (12 et 19), entre lesquelles des fils gommés (14), en fibre de verre ou métalliques, sont placés obliquement avec un pas d'espacement prédéterminé, en ce que ledit ensemble (12, 14, 19) a une largeur supérieure à la distance entre les deux tringles (7), et en ce que les parties marginales (2a et 2b) dudit ensemble (12, 14, 19) sont repliées de façon connue à 180 degrés vers le plan médian transversal de symétrie (XX) du pneumatique autour des deux tringles (7).

6. Pneumatique selon la revendication 5, caractérisé en ce que les fils gommés (14) sont disposés avec un angle de 17 degrés à 20 degrés par rapport à l'axe longitudinal des nappes (12 et 19).

7. Pneumatique selon l'une quelconque des revendications précédentes, caractérisé en ce que l'armature radiale (3) est formée par un ensemble de deux nappes de gomme (23 et 28) respectivement interne et externe, coupées à une longueur prédéterminée, entre lesquelles des fils gommés (25), en fibres de verre ou métalliques, sont disposés transversalement par rapport à l'axe longitudinal des deux nappes (23 et 28) avec un pas d'espacement prédéterminé, et en ce que ledit ensemble (23, 25, 28) formant l'armature radiale (3) est disposé de manière à envelopper l'ensemble formé par la chambre à air (1), la ceinture (2) et les deux tringles (7).

8. Pneumatique selon la revendication 7, caractérisé en ce que les parties marginales dudit ensemble (23, 25, 28) formant l'armature radiale (3) se rejoignent dans le plan médian transversal (XX) du pneumatique à l'extérieur de la ceinture (2).

9. Pneumatique selon la revendication 8, caractérisé en ce que les parties marginales dudit ensemble (23, 25, 28) formant l'armature radiale (3) sont reliées entre elles par la bande de roulement (6).

10. Pneumatique selon la revendication 8, caractérisé en ce que les parties marginales dudit ensemble (23, 25, 28) formant l'armature radiale (3) sont reliées entre elles par une nappe de gomme de liaison ou par une deuxième ceinture (34) gommée et tissée de fils croisés, autour de laquelle est disposée la bande de roulement (6).

## Patentansprüche

1. Rohrförmiger Luftreifen für Kraftfahrzeuge, mit einer aufblasbaren rohrförmigen Luftkammer (1), einem Gürtel (2), einer radialen Verstärkung (3), einem Felgenband (4), Flankengummi (23, 28), einer Lauffläche (6) und zwei halbstarren Ringwulsten (7) im Bereich des Gürtels (2) an dessen Rändern, dadurch gekennzeichnet, daß das Felgenband (4) eine Breite *l* hat, die zwischen 0,25 L und 0,35 L ausmacht, wobei L die Gesamtbreite der Lauffläche (6) ist, daß der Luftreifenquerschnitt in an sich bekannter Weise ein zwischen 0,5 und 0,6 liegendes Höhen/Breiten-Verhältnis H/L hat, wobei H die Gesamthöhe zwischen Felgenband (4) und Lauffläche (6) ist, und daß jede Flanke (5) des Luftreifens, im Querschnitt gesehen, im Bereich der Verstärkung (3) oder des inneren Flankengummis (23) ein Profil aufweist, das dem oberen Teil der Kurve (E) entspricht, die das Meridianprofil eines üblichen Radialreifens wiedergibt und durch die Gleichgewichtsbedingung

$$x=\int_{y}^{a} \frac{y^2-b^2}{\sqrt{(a^2-b^2)^2-(y^2-b^2)^2}} \cdot dy$$

definiert wird, worin *a* die von der Rotationsachse des Luftreifens aus gemessene Ordinate des Kronenpunkts des Meridianprofils und *b* die Ordinate des Punktes größter Breite des genannten Meridianprofils bedeuten, wobei der genannte obere Kurventeil ungefähr zwischen den Punkten (C) bzw. (D) dieser Kurve (E) liegt, in denen die Tangenten vertikal bzw. horizontal verlaufen, wobei die ganze Anordnung so getroffen ist, daß der Luftreifen im Querschnitt gesehen ungefähr ein isostabiles Dreiecksnetz bildet.

2. Luftreifen nach Anspruch 1, dadurch gekennzeichnet, daß die innere Umfangsfläche des Felgenbandes (4) in an sich bekannter Weise mit Vorsprüngen (11) versehen ist, die in Umfangsrichtung voneinander Abstand haben un Riffeln bilden, die ein Verhaken des Luftreifens an einer Felge (10) des Rades ermöglichen, die in entsprechender Weise mit Riffeln versehen ist.

3. Luftreifen nach Anspruch 1, dadurch gekennzeichnet, daß die innere Umfangsfläche des Felgenbandes (4) in an sich bekannter Weise aus zwei kegelstumpfartigen Flächen zusammengesetzt ist, die so angeordnet sind, daß der von ihnen abgegrenzte Innenraum Diabolo-Form hat.

4. Luftreifen nach Anspruch 1, dadurch gekennzeichnet, daß die Wulste (7) in den Rändern des Gürtels (2) verankert sind.

5. Luftreifen nach Anspruch 4, dadurch gekennzeichnet, daß der Gürtel (2) in an sich bekannter Weise aus einer Bauteilgruppe von zwei Gummilagen (12 und 19) besteht, zwischen denen gummierte Fäden (14) aus Glas- oder Metallfaser schräg mit einem vorbestimmten gegenseitigen Abstand angeordnet sind, daß die Breite der genannten Bauteilgruppe (12, 14, 19) größer als der Abstand zwischen den beiden Wulsten (7) ist, und daß die Randteile (2*a* und 2*b*) der

genannten Bauteilgruppe (12, 14, 19) in an sich bekannter Weise um 180° zu der Mittelquer-Symmetrieebene (XX) um die beiden Wulste (7) des Luftreifens herum gelegt sind.

6. Luftreifen nach Anspruch 5, dadurch gekennzeichnet, daß die gummierten Fäden (14) unter einem zwischen 17° und 20° liegenden Winkel gegenüber der Längsachse der Lagen (12 und 19) angeordnet sind.

7. Luftreifen nach einem der vorhergehenden Ansprüche, dadurch gekennzeichnet, daß die radiale Verstärkung (3) aus einer inneren bzw. äußeren Gummilage (23 bzw. 28) besteht, die auf eine vorbestimmte Länge geschnitten sind, zwischen denen die gummierten Fäden (25) aus Glas- oder Metallfasern quer zu der Längsachse der beiden Lagen (23 und 28) mit einem vorbestimmten gegenseitigen Abstand angeordnet sind, und daß die genannte, die radiale Verstärkung (3) bildende Bauteilgruppe (23, 25, 28) so angeordnet ist, daß sie die aus der Luftkammer (1), dem Gürtel (2) und den beiden Wulsten (7) bestehende Bauteilgruppe umhüllt.

8. Luftreifen nach Anspruch 7, dadurch gekennzeichnet, daß die Randteile der genannten, die radiale Verstärkung (3) bildenden Bauteilgruppe (23, 25, 28) in der Mittelquerebene (XX) des Luftreifens außerhalb des Gürtels (2) aufeinandertreffen.

9. Luftreifen nach Anspruch 8, dadurch gekennzeichnet, daß die Randteile der die radiale Verstärkung (3) bildenden Bauteilgruppe (23, 25, 28) durch die Lauffläche (6) miteinander verbunden sind.

10. Luftreifen nach Anspruch 8, dadurch gekennzeichnet, daß die Randteile der genannten, die radiale Verstärkung (3) bildenden Bauteilgruppe (23, 25, 28) durch eine verbindende Gummilage oder durch einen zweiten Gürtel (34) miteinander verbunden sind der, gummiert und mit gekreuzten Fäden gewebt ist und um den herum die Lauffläche (6) angeordnet ist.

**Claims**

1. A tubular tyre for automobile vehicles, of the type comprising an inflatable tubular air chamber (1), a belt (2), a winding (3) of the radial tyre, a rim band (4), rubber wall elements (23, 28), a tread (6) and two semi-rigid circular wires (7) disposed at the edges of the belt (2), characterised in that the rim band (4) has a width *l* of between 0.25 L and 0.35 L, wherein L represents the total width of the tread (6), in that the cross-section of the tyre has in a known manner a ratio H/L of between 0.5 and 0.6, wherein H represents the total height between the rim band (4) and the tread (6) and in that, seen in cross-section, each side wall (5) of the tyre has, in the area of the winding (3) or of the inner rubber wall element (23), a profile which corresponds to the upper portion of the curve (E) representing the meridian profile of a conventional radial tyre and defined by the equilibrium equation:

$$x = \int_{y}^{a} \frac{y^2 - b^2}{\sqrt{(a^2 - b^2)^2 - (y^2 - b^2)^2}} \cdot dy$$

wherein $a$ is the ordinate of the crown point of the meridian profile, measured from the axis of rotation of the tyre, and $b$ is the ordinate of the point of maximum width of the said meridian profile, the said upper portion being comprised substantially between the points (C) and (D) of this curve (E) where the tangents are vertical and horizontal respectively, the assembly being such that the tyre, seen in cross-section, substantially forms an isostable triangular system.

2. A tyre as claimed in claim 1, characterised in that the inner peripheral surface of the rim band (4) is provided, in a manner known *per se*, with projecting portions (11) spaced around the circumference and forming ribs enabling the tyre to be attached to a rim (10), grooved in a corresponding manner, of a wheel.

3. A tyre as claimed in claim 1, characterised in that the inner peripheral surface of the rim band (4) is constituted, in a manner known *per se*, by two frusto-conical surfaces disposed in such a way that the internal volume which they define has the shape of a diabolo.

4. A tyre as claimed in claim 1, characterised in that the wires (7) are anchored in the edges of the belt (2).

5. A tyre as claimed in claim 4, characterised in that the belt (2) is formed, in a manner known *per se*, by an assembly of two sheets of rubber (12 and 19), between which metallic or glass fibre rubberised wires (14) are disposed on a bias angle with a predetermined spacing, in that the said assembly (12, 14, 19) has a width greater than the distance between the two wires (7), and in that the marginal portions (2*a* and 2*b*) of the said assembly (12, 14, 19) are folded in a known manner at 180 degrees towards the transverse, median plane of symmetry (XX) of the tyre about the two wires (7).

6. A tyre as claimed in claim 5, characterised in that the rubberised wires (14) are disposed at an angle of 17 to 20 degrees with respect to the longitudinal axis of the sheets (12 and 19).

7. A tyre as claimed in any one of the preceding claims, characterised in that the radial winding (3) is formed by an assembly of two rubber sheets (23 and 28), internal and external respectively, cut to a predetermined length, between which rubberised wires (25), made of metal or glass fibre, are disposed transversely with respect to the longitudinal axis of the two sheets (23 and 28) at a predetermined spacing and in that the said assembly (23, 25, 28) forming the radial winding (3) is disposed so as to envelop the assembly formed by the air chamber (1), the belt (2) and the two wires (7).

8. A tyre as claimed in claim 7, characterised in that the marginal portions of the said assembly (23, 25, 28) forming the radial winding (3) are joined in the transverse median plane (XX) of the tyre externally to the belt (2).

9. A tyre as claimed in claim 8, characterised in that the marginal portions of the said assembly (23, 25, 28) forming the radial winding (3) are connected together by the tread (6).

10. A tyre as claimed in claim 8, characterised in that the marginal portions of the said assembly (23, 25, 28) forming the radial winding (3) are connected together by a rubber connection sheet or by a second belt (34) of crossed wires which are rubberised and woven, about which is disposed the tread (6).

# Fig.1

# Fig.2

# Fig.3

# Fig.4

0 009 067

Fig.5

Fig.6

Fig.7

Fig.8

Fig.9

17à20°

Fig.10

Fig.15

2

Fig.11

Fig.12

Fig.13

Fig.14

Fig.17

Fig.16

Fig.18

0009067